# EUROPÄISCHE PATENTSCHRIFT

(11) **EP 0 966 376 B1**
(45) Veröffentlichungstag und Bekanntmachung des Hinweises auf die Patenterteilung: **17.07.2002**
(21) Anmeldenummer: 98913714.6
(22) Anmeldetag: 12.03.1998
(51) Int. Cl.: B60T 7/10

(54) **FESTELLBREMSANLAGE FÜR FAHRZEUGE**
VEHICLE PARKING BRAKE SYSTEM
SYSTEME DE FREINAGE POUR L'IMMOBILISATION DE VEHICULES

(30) Priorität: 12.03.1997 DE 19710006; 05.09.1997 DE 19738877
(43) Veröffentlichungstag der Anmeldung: 29.12.1999
(73) Patentinhaber: KÜSTER & Co. GmbH, 35630 Ehringshausen (DE)
(72) Erfinder: ZIPP, Jürgen, D-35619 Braunfels (DE)
(74) Vertreter: Müller, Eckhard, Dr.
(86) Internationale Anmeldenummer: EP9801448
(87) Internationale Veröffentlichungsnummer: WO9840255

(56) Entgegenhaltungen:
- DE-A- 3 909 907
- DE-A- 4 205 590
- DE-A- 19 726 188
- PATENT ABSTRACTS OF JAPAN vol. 015, no. 028 (M-1072), 23.Januar 1991 & JP 02 270667 A (RHYTHM MOTOR PARTS MFG CO LTD), 5.November 1990,
- PATENT ABSTRACTS OF JAPAN vol. 012, no. 356 (M-745), 26.September 1988 & JP 63 112224 A (ISUZU MOTORS LTD), 17.Mai 1988,
- PATENT ABSTRACTS OF JAPAN vol. 018, no. 072 (M-1555), 7.Februar 1994 -& JP 05 286424 A (TOYOTA MOTOR CORP;OTHERS: 01), 2.November 1993, in der Anmeldung erwähnt

## Beschreibung

Die Erfindung betrifft eine Feststellbremsanlage für Fahrzeuge, insbesondere Personenkraftwagen, mit einer fremdkrafterzeugenden Stelleinheit zum Anziehen oder Lösen wenigstens eines Betätigungszuges für eine Bremseinrichtung des Fahrzeuges, mit einer elektronischen Steuervorrichtung, deren Ausgangsgröße zur Betätigung der Stelleinheit dient, wobei der Steuervorrichtung Eingangsgrößen, insbesondere von einer Bedienungseinrichtung, von Sensoren und/oder Schaltern o. dgl., zugeführt werden und die Ausgangsgröße in Abhängigkeit der Eingangsgröße veränderbar ist und an oder in dem Betätigungszug ein Kraftsensor zum unmittelbaren Erfassen der auf den Betätigungszug ausgeübten Kraft angeordnet ist, wobei die Signale des Kraftsensors der Steuervorrichtung als Eingangsgröße zugeführt werden.

Eine Verstellbremsanlage mit den eingangs genannten Merkmalen ist bereits aus der JP 2-270667 A bekannt. In dieser Druckschrift ist eine Feststellbremsanlage für Kraftfahrzeuge mit einer fremdkrafterzeugenden Stelleinheit zum Anziehen oder Lösen eines Betätigungszuges für eine Bremseinrichtung des Fahrzeuges beschrieben. Die Stelleinheit ist als Gleichstrommotor ausgebildet, wobei der Gleichstrommotor über die Signale zweier Drucksensoren angesteuert wird, wobei der eine Drucksensor die Betätigungskraft des Bremshebels und der andere Drucksensor die Betätigungskraft des Seilzuges detektiert.

Aus der DE 42 05 590 A1 ist eine weitere Feststellbremsanlage für Kraftfahrzeuge mit einem fußbetätigten Bremspedal bekannt. Dabei ist eine zusätzliche elektromotorische Stelleinheit vorgesehen, die über eine Kopplungsvorrichtung direkt auf das Bremspedal wirkt. Durch Drücken eines Tasters, der sich bspw. im Bediengriff des Fahrzeuggetriebes befindet, wird die Drehrichtung des Elektromotors der Stelleinheit jeweils umgekehrt, so daß das Bremspedal elektromotorisch nach unten verschwenkt bzw. wieder nach oben freigegeben wird. Die mechanische Arretierung des Bremspedals erfolgt über das selbsthemmend ausgelegte Getriebe der Stelleinheit. Weiterhin ermöglicht die Ausgestaltung der Kopplungsvorrichtung zu jedem Zeitpunkt das Niederdrücken des Bremspedals durch den Bediener. Die Feststellbremsanlage weist eine elektronische Steuerungseinrichtung auf, mit der Zusatzfunktionen realisiert werden können. So kann z.B. die Sicherung gegen ein unbeabsichtigtes Lösen der fremdkraftbetätigten Feststellbremse dadurch erfolgen, daß nach Abschalten der Zündung die Stelleinheit elektrisch nicht mehr angesteuert wird. Auch kann durch die Erfassung des Betriebsstroms des Elektromotors und des Verdrehwinkels des Getriebestirnrades eine Aussage über die Bremskraft und den momentanen Hub des Bremsseilweges gewonnen werden, woraus Aussagen über den Zustand der Reibbeläge der Feststellbremse und den Zustand der bremskraftübertragenden Verbindungselemente möglich sind. Weiterhin kann auch die Bremskraft kennfeldgesteuert über den Betriebsstrom des Elektromotors aufgebracht werden, wobei ferner eine von dem Hub des Bremsseiles abhängige Betätigungsgeschwindigkeit realisierbar ist.

Die bekannte Feststellbremsanlage erweist sich jedoch insoweit als nachteilig, daß sie recht unflexibel zu handhaben ist und die einzelnen Lastzustände des Betätigungszuges bzw. der Bremseinrichtung wenig oder nur kaum berücksichtigt. Weiterhin erweist es sich als nachteilig, daß die auf den Betätigungszug bzw. die Bremse wirkende Betätigungskraft indirekt über eine Messung des in den Elektromotor der Stelleinheit fließenden Stromes erfolgt. Zum einen ist diese Meßmethode recht ungenau, da der in den Elektromotor der Stelleinheit fließende Strom auch von Umwelteinflüssen, wie Temperatur o. dgl., abhängig ist. Zum anderen ist eine Kraftmessung jedenfalls dann nicht möglich, wenn der Elektromotor außer Betrieb ist.

Weiterhin ist aus der JP-A-5-286424 eine Feststellbremse für Kraftfahrzeuge bekannt, wobei nach Anziehen eines Betätigungshebels durch den Fahrer ein Drucksensor die auf ein Gleitstück ausgeübte Reaktionskraft der Feststellbremse detektiert. Im Falle, daß die gemessene Reaktionskraft kleiner ist als ein vorgegebener Wert ist, wird ein Stellmotor mit Hilfe einer Steuerung in Vorwärtsrichtung angetrieben, wobei der Betätigungshebel zusammen mit dem Gleitstück über einen Seilzug angehoben wird. Hierdurch soll das Bremsseil weiter angezogen und die Wirkkraft auf die Feststellbremse erhöht werden. Sobald der Drucksensor detektiert, daß die Betätigungskraft einen vorgegebenen Wert erreicht hat, wird der Motor angehalten, wobei der Betätigungshebel in der angehobenen Stellung gehalten wird. Nachteilig bei dem bekannten System ist, daß die auf den Betätigungszug ausgeübte Kraft nicht unmittelbar erfaßt wird, so daß die Messung mit erheblichen Fehlern behaftet sein kann.

Demgegenüber liegt der Erfindung die Aufgabe zugrunde, eine Feststellbremsanlage für Fahrzeuge mit den eingangs genannten Merkmalen dahingehend weiterzubilden, daß eine flexible Handhabung gewährleistet ist und die einzelnen Lastzustände der Feststellbremsanlage sicher und genau erfaßbar sind.

Diese Aufgabe wird nach der Erfindung bei der Feststellbremsanlage mit den eingangs genannten Merkmalen i. w. dadurch gelöst, daß dem Betätigungszug (14) ein Wegsensor (24) zum Erfassen des Hubes des Betätigungszuges (14) zugeordnet ist, dessen Signale der Steuervorrichtung (18) als Eingangsgröße zugeführt werden.

Die Stellbewegung der fremdkrafterzeugenden Stelleinheit wird in eine Translationsbewegung zum Spannen bzw. Anziehen oder Lösen des Betätigungszuges für eine Bremseinrichtung umgesetzt. An oder in dem Betätigungszug sind ein Kraftsensor sowie ein Wegsensor angeordnet, die die auf den Bremszug bzw. die Bremse einwirkende Kraft sowie den Hub bzw. Verstellung messen und diese Größen als Istwerte an die Steuervorrichtung weitergeben. Insbesondere ist mit der Feststellbremsanlage auch eine direkte Kraftmessung bei stillstehendem Fahrzeug möglich, so daß eine ständige Kontrolle bzw. Überwachung der aktuellen Bremskraft ermöglicht ist, ohne daß die fremdkrafterzeugende Stelleinheit in Betrieb genommen werden müßte. Somit kann die erfindungsgemäße Feststellbremsanlage bei einem etwaigen Abfall der Bremskraft automatisch nachgestellt werden, auch wenn das Fahrzeug für längere Zeit im ausgeschalteten Zustand geparkt ist. Durch den Einsatz eines Wegsensors zum Erfassen des Hubes des Betätigungszuges kann sowohl beim Feststellen als auch beim Lösen der Bremse bzw. des Betätigungszuges der Hub bzw. Verstellweg mittels des Wegsensors erfaßt und ggf. zur Bewertung des Bremsverhaltens und zur möglichen Fehlerdiagnose herangezogen werden. Ein weiterer Vorteil besteht darin, daß durch den Einsatz des Wegsensors eine zusätzliche Positionserkennung, bspw. mittels Endschaltern o. dgl., nicht erforderlich ist.

Nach einer ersten vorteilhaften Ausgestaltung der Erfindung ist es vorgesehen, daß der Kraftmesser ein elastisches Element aufweist, welches an oder in dem Betätigungszug angeordnet ist und dessen Verformung, bspw. seine Dehnung oder Torsion, zur Ermittlung der auf den Betätigungszug ausgeübten Kraft dient. Hierdurch ist in konstruktiv einfacher Weise eine unmittelbare Erfassung der Kraft auf den Betätigungszug ermöglicht. Als elastisches Element kommen bspw. eine Feder in Betracht, welche in den Betätigungszug integriert oder an einem Ende des Zuges zur Geber- oder Nehmereinheit hin angelenkt ist. Durch Erfassung des Federhubes kann dann auf die entsprechende Kraft geschlossen werden.

Dabei besteht nach einer anderen Weiterbildung der Erfindung die Möglichkeit, daß die Steuervorrichtung eine Speichervorrichtung und eine Vergleichsvorrichtung aufweist, wobei in der Speichervorrichtung wenigstens Wertepaare "Hub des Betätigungszuges/auf den Betätigungszug wirkende Kraft" als Referenzwerte abgelegt sind und in der Vergleichsvorrichtung die Referenzwerte mit den aktuellen Werten bzw. Istwerten verglichen werden. Z. B. kann der durch den Wegsensor ermittelten Position des Betätigungszuges der entsprechende Ausgangswert des Kraftsensors zugeordnet werden, wobei sämtliche Daten eines Bremsvorganges in der Speichervorrichtung abgelegt werden. Bei einem erneuten Feststellbremsvorgang werden diese abgelegten Daten als Referenzwerte herangezogen. Bei Abweichungen der gemessenen Werte (Istwerte) von den Referenzwerten (Sollwerte) kann dann auf ein Fehlverhalten der Feststellbremsanlage geschlossen werden.

Nach einer weiteren Ausführungsform der Erfindung ist von der Vergleichsvorrichtung eine Signalvorrichtung betätigbar, sofern die Referenzwerte und aktuellen Werte oberhalb einer Toleranzschwelle liegende Abweichungen voneinander aufweisen.

Weiterhin besteht die Möglichkeit, daß die in der Speichervorrichtung abgelegten Referenzwerte aktualisiert bzw. adaptiv nachgeführt werden, so daß kontinuierliche bzw. langfristige Veränderungen der Bremsanlage in den Referenzwerten Berücksichtigung finden. Hierdurch ist eine Anpassung der Referenzwerte, bspw. an das Setzverhalten der Gesamtanlage, Verschleiß der Bremsbeläge, Längung der Betätigungszüge o. dgl., möglich. Somit ist eine erheblich verbesserte Diagnosefähigkeit der erfindungsgemäßen Feststellbremsanlage gegeben.

Desweiteren bietet es sich nach einer vorteilhaften Ausgestaltung der Erfindung an, daß der Steuervorrichtung als Eingangsgröße Signale für die auf den Betätigungszug auszuübende Kraft zugeführt werden, wobei als Sollwertgeber bevorzugt ein mit dem Bremspedal des Fahrzeuges gekoppelter Kraftaufnehmer zur Anwendung kommt. Es besteht jedoch auch die Möglichkeit, daß als Sollwertgeber übliche elektronische Bedienungselemente, wie bspw. Potentiometer, Schalter, Wippschalter, Taster o. dgl., Anwendung finden, welche an beliebiger Stelle im Zugriffsbereich des Fahrers angeordnet werden können. Ebenso ist es denkbar, den Bremskraftsollwert durch einen in dem Bremspedal integrierten Kraftsensor zu realisieren, der die Betätigungskraft des Bremspedals durch den Fahrer ermittelt und an die Steuervorrichtung weitergibt. Der eigentliche Bremsvorgang wird dann entweder selbsttätig, bspw. bei Stillstand des Fahrzeuges, oder durch eine Betätigung einer Bedienungseinrichtung bzw. eines Betätigungselementes, wie Schalter, Wipptaster o. dgl., ausgelöst. Dies ist sowohl im Stillstand des Fahrzeuges, also bspw. beim Parken möglich, als auch während der Fahrt, wenn die Feststellbremsanlage als Hilfsbremse, bspw. bei Ausfall der Hauptbremse eingesetzt werden soll.

Alternativ besteht die Möglichkeit, daß der Steuervorrichtung als Eingangsgröße Signale eines Neigungssensors zugeführt werden. Hierdurch kann die Bremskraft der Feststellbremsanlage in Abhängigkeit von der Neigung des Fahrzeuges als Sollwert vorgegeben werden, wodurch eine optimale Anpassung an die jeweils erforderliche Bremskraft gewährleistet ist. Der eigentliche Bremsvorgang wird dann entweder selbsttätig im Stillstand des Fahrzeuges oder aber durch eine Betätigung der Bedienungseinrichtung oder durch Ausschalten der Zündung o. dgl. ausgelöst. Es versteht sich, daß bspw. durch ein nochmaliges Betätigen des Bedienungselementes diese Sollwertvorgabe des Neigungssensors ausgeschaltet und die Bremskraft, bspw. auf einen Maximalwert eingestellt werden kann.

Weiterhin hat es sich als vorteilhaft erwiesen, daß die Stelleinheit als Gleichstrommotor mit angeschlossenem oder integrierten Getriebe ausgebildet ist.

Nach einer anderen vorteilhaften Weiterbildung der Erfindung ist der zur Ausübung eines vorbestimmten maximalen Kraftwertes erforderliche Hubwert des Betätigungszuges während des Anziehens der Bremse in einer Speichervorrichtung abgelegt, wobei der Betätigungszug zum Lösen der Bremse um diesen gespeicherten, bevorzugt konstanten, Hubwert mittels der Stelleinheit verfahren wird. Aufgrund dieser Maßnahmen ist es möglich, einen selbsttätigen bzw. automatischen Längenausgleich des Betätigungszuges zu realisieren. Hat sich bspw. bei angezogener Feststellbremse der Betätigungszug um einen gewissen Wert, bspw. 0,5 mm verlängert, so wird diese Verlängerung dadurch aus dem System genommen, daß der Betätigungszug zum Lösen lediglich um den zuvor zum Spannen erforderlichen Hub verfahren wird. Hierdurch wird der Nullpunkt des Systems um die Seillängung verschoben, so daß die Lose aus dem System herausgenommen ist. Es versteht sich, daß das Lösen der Bremse auch kraftgeregelt durchgeführt werden kann.

Nach einer weiteren Ausgestaltung der Erfindung ist an einen Ausgang der Steuervorrichtung eine Anzeigevorrichtung, wie eine optische Anzeige, bspw. ein LED-Band, oder eine akustische Anzeige angeschlossen, mit der die aktuelle Bremskraft darstellbar ist.

Weiterhin kann die Bedienungseinrichtung von Vorteil als digitaler Signalgeber oder auch mehrstufiger oder als stufenloser Geber nach einer Servo-Steuerung ausgebildet sein. Bei gestufter, wie auch stufenloser Betriebsweise läßt sich ein dosiertes Feststellen und Lösen der Feststellbremsanlage erreichen, was auch bei Einsatz der Feststellbremsanlage als Hilfsbremseinrichtung, bspw. für den Fall, daß die Hauptbremsanlage ausgefallen ist, von Vorteil ist. Durch den Wegfall einer mechanischen Betätigungseinrichtung und den Einsatz der elektrischen Bedienungseinrichtung wird als weiterer Vorteil erreicht, daß eine erhebliche Raumeinsparung und eine beliebige Anordnung der elektrischen Bedienungseinrichtung möglich ist, da diese nicht an das mechanische Bedienungselement der Feststellbremsanlage gekoppelt sein muß. Zusätzlich ist ein Kraftaufwand zum Betätigen der Feststellbremsanlage nicht mehr erforderlich.

Die Servosteuerung kann auf folgende Arten erfolgen:
- durch Pulsweitenmodulation (PWM),
- durch Regelung der Amplitude der Motorspannung,
- durch getaktete Motorspannung mit konstantem Puls-Pausen-Verhältnis,
- durch Ein-Aus-Betrieb, z. B. Einschalten des Motors bei Änderung des Sollwertes und Ausschalten, wenn Istwert und Sollwert übereinstimmen.

Es versteht sich, daß die Bedienungseinrichtung auch als mechanisches Bedienelement zum Anziehen oder Lösen des Betätigungszuges ausgebildet sein kann.

Nach einer anderen besonders vorteilhaften Ausführungsform besteht die Möglichkeit, daß bei Ausfall der Betriebsbremsanlage eine Hilfsbremsvorrichtung zum Umschalten der Feststellbremse in einen Hilfsbremsmodus vorgesehen ist, wobei das Bremspedal einen Kraftaufnehmer als Sollwertgeber für die Feststellbremse aufweist.

In Verbindung mit einem doppelt belegten Pedal ist eine Notbetätigung der Feststellbremsanlage möglich, so daß zusätzliche mechanische Betätigungseinrichtungen, wie Handbremshebel oder ein zusätzliches Pedal, entfallen können. Eine derartige Doppelbelegung eines Pedals ist in der Patentanmeldung 197 26 188.4 näher beschrieben, die durch ausdrücklichen Verweis in den Offenbarungsgehalt der vorgehenden Anmeldung aufgenommen wird. Die Notbetätigung der elektrischen Feststellbremse kann nicht nur als mechanische Version, z.B. doppeltes Pedal, sondern auch als elektrische Version durch Einsatz eines zusätzlichen Steuergerätes und ggf. einer zusätzlichen Stelleinheit (Motor mit Getriebe) sowie evtl. einer zusätzlichen Batterie ausgebildet sein.

Es bietet sich auch an, daß der Steuervorrichtung als Eingangsgröße wenigstens eines oder mehrere der folgenden Signale zugeführt werden: Signal des Zündschalters, Signal der Wegfahrsperrvorrichtung, Signal des Geschwindigkeitsmessers, Signal eines Bremslichtschalters, Signale des Antiblockiersystems, Signale eines Türschloßkontaktes, Signale einer Diagnosevorrichtung. Aufgrund dieser Maßnahmen sind verschiedene Ausgestaltungen der Feststellbremsanlage möglich. Zum Beispiel läßt sich eine Sicherheitsstellung, bspw. als Kindersicherung dadurch realisieren, daß die Feststellbremsanlage bzw. die Bedienungseinrichtung insbesondere nur bei eingeschalteter Zündung bzw. im Zündschloß befindlichem Schlüssel betätigt werden kann bzw. an die Wegfahrsperrvorrichtung gekoppelt ist. Hierdurch ist auch eine gewisse Diebstahlsicherung gegeben. Es versteht sich, daß das Feststellen der Feststellbremsanlage natürlich jederzeit, unabhängig von der Stellung des Zündschlüssels möglich ist.

Dabei besteht jedoch auch die Möglichkeit, daß ggf. zusätzlich die Fahrzeuggeschwindigkeit zur Unterscheidung zwischen Fahrt und Stillstand des Fahrzeuges erfaßt wird, um zwischen den Betriebsarten "Feststellbremsung" und "Hilfsbremsung", bspw. im Falle eines Ausfalles der Betriebsbremsanlage des Fahrzeuges, zu unterscheiden.

Auch kann die Betätigung des Bremspedals, bspw. über einen Bremslichtschalter mit der eigentlichen Bedienungseinrichtung logisch verknüpft bzw. gekoppelt werden, so daß eine unbeabsichtigte Betätigung der Feststellbremseinrichtung während der Fahrt vermieden oder verhindert ist, falls die Bedienungseinrichtung einmal aus Versehen betätigt werden sollte. Dabei besteht auch die Möglichkeit, daß zunächst bei einer unbeabsichtigten Betätigung ein optisches oder akustisches Warnsignal abgegeben wird, ohne daß bereits die Feststellbremsung aktiviert wird. Dies könnte dann bspw. bei einer nochmaligen Betätigung des Bedienungselementes geschehen. Auch kann die Feststellbremsanlage selbsttätig gelöst werden und/oder ein akustisches Signal bei Fahrantritt abgegeben, wenn die Feststellbremse vor Beginn der Fahrt noch nicht gelöst wurde. Das Kriterium hierzu kann bspw. von dem Geschwindigkeitssensor abgeleitet werden, wobei dann zwischen den Zuständen des Fahrzeuges mit der Geschwindigkeit Null und der Geschwindigkeit größer als Null zu unterscheiden ist. Dadurch, daß der Steuervorrichtung auch Signale des Antiblockiersystems zugeführt werden, besteht die Möglichkeit, eine Überbremsung in gewissen Situationen mittels der Feststellbremsanlage zu vermeiden. Desweiteren kann auch eine optische Anzeige vorgesehen sein, welche das Erreichen der vorgegebenen Bremskraft, bspw. mittels einer Signalleuchte o. dgl. anzeigt.

Die erfindungsgemäße Feststellbremsanlage ermöglicht auch eine umfangreiche Diagnosefähigkeit durch die Erfassung des Verstellweges des Betätigungszuges und der auf diesen Betätigungszug wirkenden Kraft. Bspw. kann hierdurch ein Defekt der Stelleinheit, der Sensorik, der Betätigung oder auch ein Riß des Betätigungszuges ohne weiteres erkannt werden. Zur Fehlererkennung und zur Strombregrenzung werden der Motorstrom gemessen oder die Dauer eines Bremsvorganges ermittelt. Es kann aber auch ein Zeitfenster vorgegeben werden, in welchem der Bremsvorgang abgeschlossen sein muß.

Nach einer weiteren Ausgestaltung bietet es sich an, daß bei der Diagnose eines Fehlers in der Betriebsbremsanlage des Fahrzeuges die Feststellbremsanlage selbsttätig von der Hilfsbremsvorrichtung in den Hilfsbremsmodus überführt wird. Sollte ein Defekt der eigentlichen Betriebsbremse von der Diagnosevorrichtung erkannt werden, läßt sich eine Hilfsbremsung mit Hilfe der erfindungsgemäßen Feststellbremsanlage selbsttätig durch die Betätigung des Bremspedals durchführen. Dies ist insbesondere bei Einsatz eines im oder am Bremspedal integrierten oder angeordneten Kraftsensors zur Ermittlung der auf das Pedal wirkenden Betätigungskraft realisierbar. Bei der selbsttätigen Umschaltung auf die elektrische Feststellbremsanlage lassen sich natürlich auch die Einflüsse des Antiblockiersystems bei der Erzielung der gewünschten Bremswirkung mit verarbeiten. Der Vorteil besteht darin, daß ein Zeitverlust durch Umdenken (Reaktionszeit) nicht auftritt.

Es bietet sich auch an, daß die von der Stelleinheit auf den Betätigungszug ausgeübte Kraft mittels einer Begrenzungsvorrichtung auf einen oberen Grenzwert beschränkt wird. Somit kann durch den Einsatz des Kraftsensors die auf den Betätigungszug bzw. die Bremse wirkende Kraft zur Vermeidung eines Überspannens des Betätigungszuges begrenzt werden. Hierdurch wird die erfindungsgemäße Feststellbremsanlage als sicherheitsrelevantes Bauteil in ihrer Funktion über den üblichen Sicherheitsstandard weiter verbessert. Selbstredend wird durch diese Maßnahme auch die Lebensdauer des Betätigungszuges zwischen dem Geber und dem Nehmer weiter erhöht.

Weitere Vorteile und Anwendungsmöglichkeiten der vorliegenden Erfindung ergeben sich aus der nachfolgenden Beschreibung der Ausführungsbeispiele anhand der Zeichnungen.

Es zeigen:
- Figur 1: in schematischer Darstellung ein Ausführungsbeispiel der erfindungsgemäßen Feststellbremsanlage,
- Figur 2: ein Ausführungsbeispiel eines Blockschaltbildes der Steuervorrichtung für die erfindungsgemäße Feststellbremsanlage,
- Figur 3: ein beispielhaftes Struktogramm bzw. Flußdiagramm der Funktionsweise der elektronischen Steuervorrichtung, welche bspw. mittels eines Mikrocontrollers realisiert werden kann und
- Figur 4: ein weiteres Struktogramm bzw. Flußdiagramm eines weiteren Ausführungsbeispiels der elektronischen Steuervorrichtung.

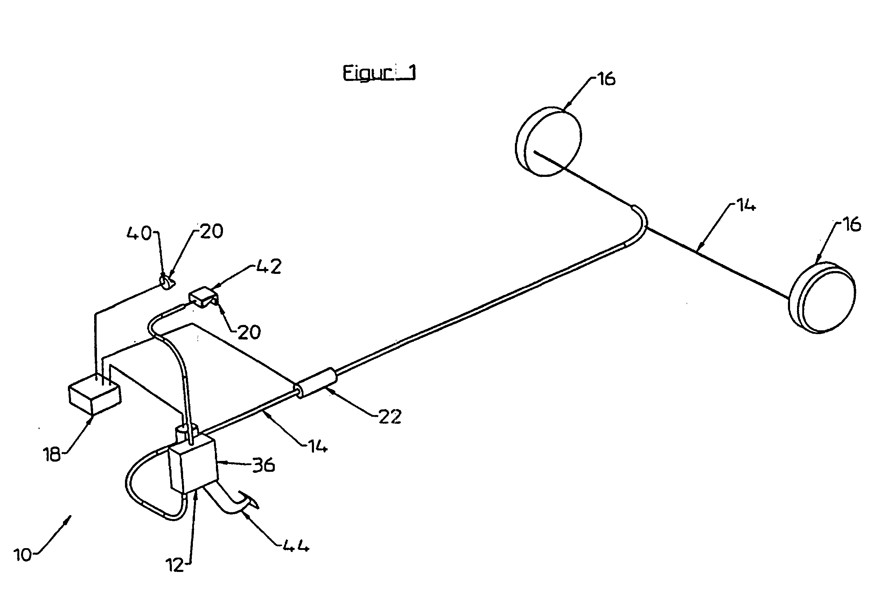

Wie Figur 1 zu entnehmen, ist weist die Feststellbremsanlage 10 eine fremdkrafterzeugende Stelleinheit 12 zum Anziehen oder Lösen wenigstens eines Betätigungszuges 14 für eine Bremsvorrichtung 16 eines Fahrzeuges, insbesondere eines Kraftfahrzeuges auf. Eine elektronische Steuervorrichtung 18 dient zur Betätigung der Stelleinheit 12, wobei der Steuervorrichtung 18 Eingangsgrößen, insbesondere von einer Bedienungseinrichtung 20 und einem Kraftsensor 22 zuführbar sind. Die Ausgangsgröße der Steuervorrichtung 18 ist in Abhängigkeit der Eingangsgrößen veränderbar. Der Kraftsensor 22 ist dem Betätigungszug 14 zugeordnet und erfaßt die auf den Betätigungszug 14 mittels der Stelleinheit 12 ausgeübte Kraft unmittelbar. Die Signale des Kraftsensors 22 werden der Steuervorrichtung 18 als Eingangsgröße zugeführt.

Der Kraftsensor 22 bzw. das Dynamometer weist vorzugsweise ein elastisches Element auf, dessen Verformung, insbesondere dessen Dehnung oder Torsion, zur Bestimmung der Kraft auf den Betätigungszug 14 dient. Als elastisches Element kommt insbesondere eine Feder in Betracht.

Die Bedienungseinrichtung 20 kann als elektrischer Signalgeber 40 oder aber auch als mechanisches Bedienelement 42 zum Lösen und Feststellen der Feststellbremsanlage 10 ausgebildet sein. Die Stelleinheit 12 besteht vorliegend aus einem Gleichspannungselektromotor, an dem ein Getriebe 36 angeschlossen ist. Die Bedienungseinrichtung 20 kann von dem Fahrer des Fahrzeuges, bspw. per Hand, zum Steuern der Feststellbremsanlage 10 betätigt werden. Eine mechanische Notbetätigung der Feststellbremsanlage 10 kann über ein Pedal 44 o. dgl. erfolgen. Durch die Bedienungseinrichtung 20 kann die Feststellbremsanlage 10 festgestellt oder gelöst werden. Zusätzlich oder alternativ ist ein Signalgeber 40 vorgesehen, mit dem eine Eingabe des Sollwertes für die von der Stelleinheit 12 einzustellende Bremskraft erfolgen kann. Der Signalgeber 40 und die Bedienungseinrichtung 20 können bspw. auch in dem Bedienelement 42 integriert sein. Die Notbetätigung ist somit Ersatzfunktion der elektrischen Feststellbremse.

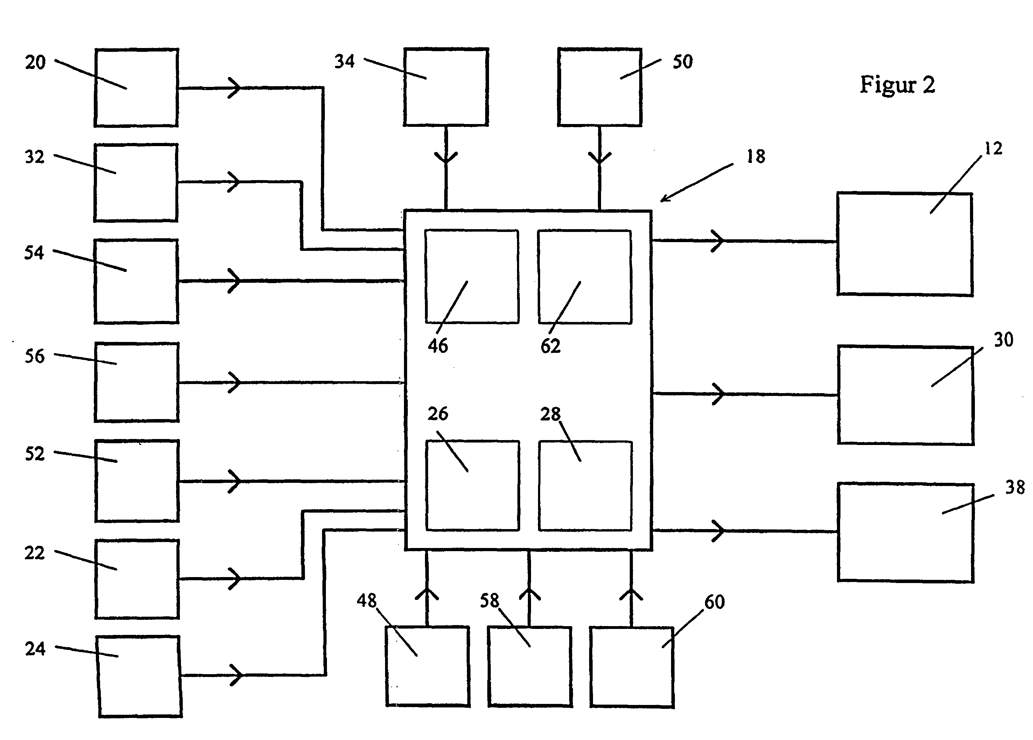

Weiterhin ist dem Betätigungszug 14 ein Wegsensor 24 zum Erfassen des Hubes des Betätigungszuges 14 zugeordnet, dessen Signale, wie insbesondere aus Figur 2 ersichtlich, der Steuervorrichtung 10 als Eingangsgröße zugeführt werden. Die Steuervorrichtung 18 weist eine Speichervorrichtung 26 sowie eine Vergleichsvorrichtung 28 auf, wobei in der Speichervorrichtung 26 Daten oder Datenpaare bzgl. des "Hubes" des Betätigungszuges 14 und der auf den Betätigungszug 14 wirkenden Kraft als Referenz- oder Sollwerte abgelegt sind und in der Vergleichsvorrichtung 28 die Referenzwerte mit den aktuellen Werten verglichen werden. Sofern die Referenzwerte und aktuellen Werte bzgl. des Hubes bzw. der Kraft oberhalb einer Toleranzschwelle liegende Abweichungen voneinander aufweisen, ist eine Signalvorrichtung 30 von der Vergleichsvorrichtung 28 betätigbar. Es besteht auch die Möglichkeit, die in der Speichervorrichtung 26 abgelegten Referenzwerte zu aktualisieren bzw. adaptiv anzupassen, so daß kontinuierliche bzw. langfristige Veränderungen der Bremsanlage in den Referenzwerten Berücksichtigung finden.

Der Steuervorrichtung 18 werden als Eingangsgröße Signale für die auf dem Betätigungszug auszuübende Kraft als Sollwerte zugeführt, wobei als Sollwertgeber bevorzugt ein mit dem Bremspedal des Fahrzeuges gekoppelter Kraftaufnehmer 32 oder ein Potentiometer, eine Wippe o. dgl. zur Anwendung kommt. Weiterhin können der Steuervorrichtung 18 als Eingangsgröße Signale eines Neigungssensors 34 zugeführt werden, so daß der Sollwert die auf den Betätigungszug 14 auszuübende Kraft bzw. Bremskraft eine Abhängigkeit von der Lage des Fahrzeuges aufweisen kann. Der zur Ausübung eines nicht dem Maximalkraft entsprechenden Kraftwertes erforderliche Hubwert des Betätigungszuges 14 wird während des Anziehens der Bremse bzw. Betätigungszuges 14 mittels der Stelleinheit 12 in einer Speichervorrichtung 26 abgelegt, so daß der Betätigungszug 14 zum Lösen der Bremse um den gespeicherten Hubwert mittels der Stelleinheit 12 verfahren wird.

An einem Ausgang der Steuervorrichtung 18 ist eine Anzeigevorrichtung 38, bspw. ein LED-Band oder eine akustische Anzeige angeschlossen, mit der die aktuelle Bremskraft darstellbar ist.

Die Bedienungseinrichtung 20 kann bspw. als mehrstufiger, stufenloser oder digitaler Signalgeber 40 ausgebildet sein. Es besteht selbstverständlich auch die Möglichkeit, daß die Bedienungseinrichtung 20 als mechanisches Bedienelement 42 lediglich zum Anziehen oder Lösen des Betätigungszuges 14 ausgelegt ist.

Bei einem Ausfall der Betriebsbremse des Fahrzeuges ist eine Bremsvorrichtung zum Umschalten der Feststellbremse in ein Hilfsbremsmodus vorgesehen, wobei das Bremspedal einen Kraftaufnehmer 32 als Sollwertgeber für die Feststellbremse aufweist. Der Steuervorrichtung 18 können als weitere Eingangsgrößen eine oder mehrere der folgenden Signale zugeführt werden: Signal des Zündschalters 48, Signal der Wegfahrsperre 50, Signal des Geschwindigkeitsmessers 52, Signal des Bremslichtschalters 54, Signal des Antiblockiersystems 56, Signale eines Türschloßkontaktes 58 oder auch Signale einer Diagnosevorrichtung 60. Bei Diagnose eines Fehlers in der Betriebsbremsanlage des Fahrzeuges besteht dann die Möglichkeit, die Feststellbremsanlage 10 selbsttätig von der Hilfsbremsvorrichtung in den Hilfsbremsmodus zu überführen. Schließlich kann die von der Stelleinheit 12 auf den Betätigungszug 14 ausgeübte Kraft mittels einer Begrenzungsvorrichtung 62 auf einen oberen Grenzwert beschränkt werden.

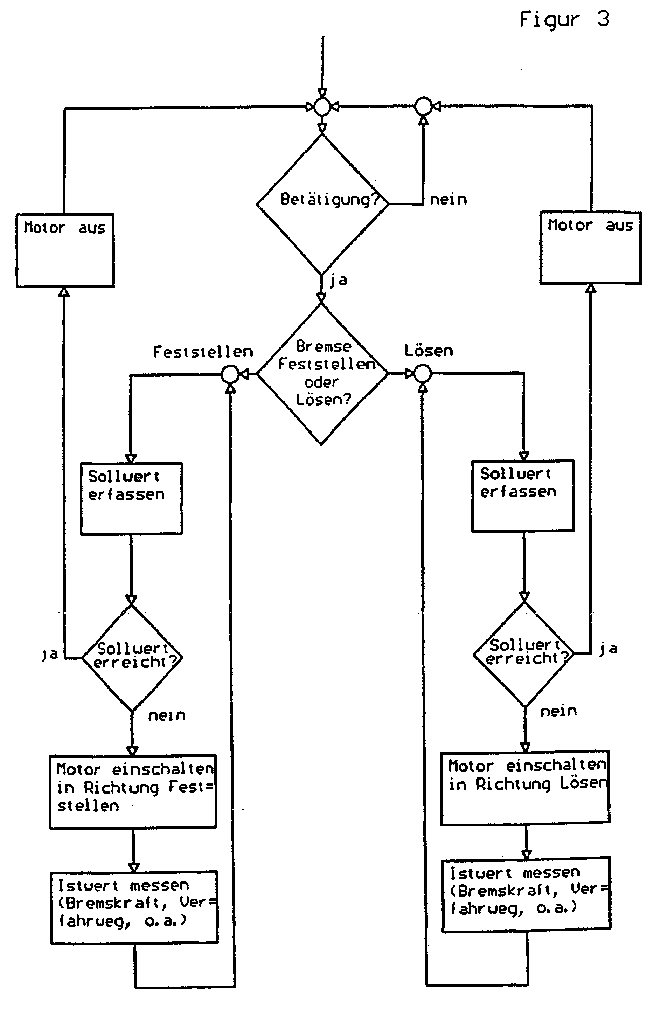

Nach dem in Figur 3 darstellten Struktogramm oder Flußdiagramm einer möglichen Auslegung der Steuervorrichtung 18 wird zunächst festgestellt, ob eine Betätigung der Feststellbremsanlage 10 mittels der Bedienungseinrichtung 20 angefordert wird. Ist dies der Fall, wird geprüft, ob die Feststellbremsanlage 10 angezogen oder gelöst werden soll, wobei jeweils zunächst ein gewünschter Sollwert, bspw. für die Bremskraft oder auch der Hub des Betätigungszuges 14 erfaßt wird. Die Stelleinheit 12 wird dann dementsprechend betätigt und zwar so lange, bis über den Kraftsensor 22, den Wegsensor 24 oder sonstige Sensoren der erfaßte Istwert mit dem Sollwert übereinstimmt. Sobald der Sollwert erreicht ist, wird die Stelleinheit 12 bzw. der Motor ausgeschaltet. Ist der Sollwert noch nicht erreicht, wird die Stelleinheit 12 weiter im eingeschalteten Zustand belassen, der aktuelle Istwert, bspw. der Bremskraft oder des Verfahrweges des Betätigungszuges gemessen, mit dem jeweils erfaßten Sollwert verglichen und auf Übereinstimmung überprüft. Ist Überstimmung zwischen Soll- und Istwert erreicht, wird die Stelleinheit wieder ausgeschaltet.

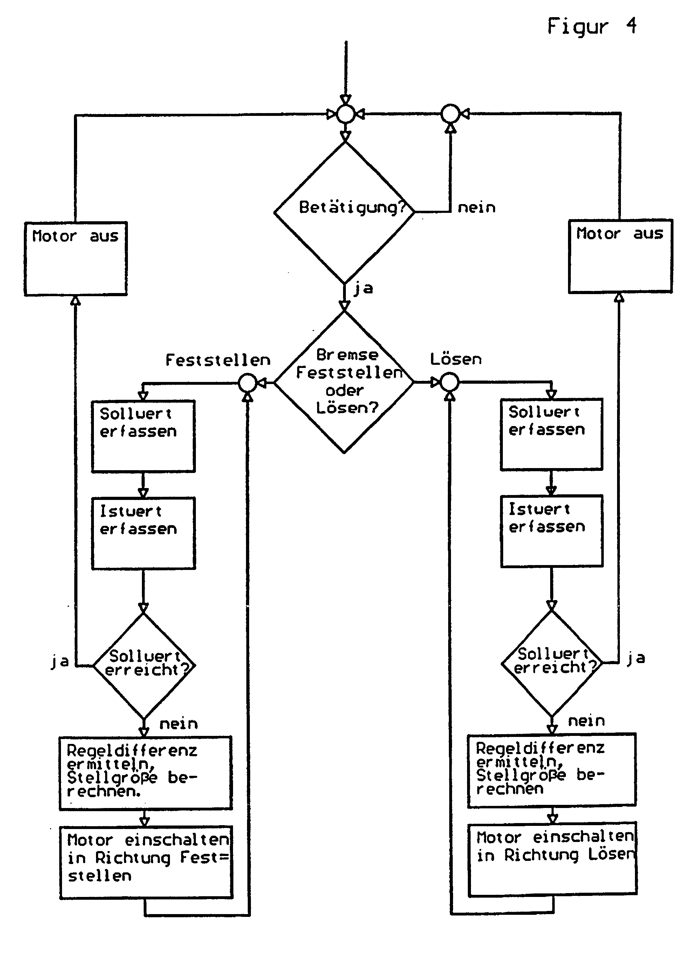

Nach dem in Figur 4 dargestellten Struktogramm oder Flußdiagramm einer weiteren möglichen Auslegung der Steuervorrichtung 18 wird zunächst festgestellt, ob eine Betätigung der Feststellbremsanlage 10 mittels der Bedienungseinrichtung 20 angefordert wird. Ist dies der Fall, wird geprüft, ob die Feststellbremsanlage 10 angezogen oder gelöst werden soll, wobei jeweils zunächst ein gewünschter Sollwert, bspw. für die Bremskraft oder auch der Hub des Betätigungsweges 14 erfaßt wird. Nun wird der entsprechende Istwert ermittelt und geprüft, ob der gewünschte Sollwert erreicht ist. Ist dies nicht der Fall, wie z.B. aus Soll- und Istwert eine Regeldifferenz ermittelt und daraus eine Stellgröße z.B. ein pulsweitenmoduliertes Signal, eine Regelspannung oder ein Taktsignal gewonnen, mit welcher die Servosteuerung der Stelleinheit vorgenommen wird. Die Stelleinheit 12 wird dann dementsprechend betätigt, und zwar so lange, bis über den Kraftsensor 22, den Wegsensor 24 oder sonstige Sensoren der erfaßte Istwert mit dem Sollwert übereinstimmt. Sobald der Sollwert erreicht ist, wird die Stelleinheit 12 bzw. der Motor ausgeschaltet. Ist der Sollwert noch nicht erreicht, wird die Stelleinheit 13 weiter im eingeschalteten Zustand belassen, der aktuelle Istwert, bspw. der Bremskraft oder des Verfahrweges des Betätigungszuges gemessen, mit dem jeweils erfaßten Sollwert verglichen und auf Übereinstimmung überprüft. Hierbei wird bei jedem Durchlauf der Regelschleife die Stellgröße neu berechnet. Ist Übereinstimmung zwischen Soll- und Istwert erreicht, wird die Stelleinheit wieder ausgeschaltet.

Zur Betätigung der Feststellbremse sind grundsätzlich zwei Eingangsgrößen erforderlich. Diese Eingangsgrößen werden durch die Auslösevorrichtung und die Sollwertvorgabe geliefert. Während die Auslösevorrichtung als Taster, Schalter, Bremslichtkontakt, Wippe o. dgl. ausgebildet ist, geschieht die Sollwertvorgabe durch ein Potentiometer, einem Neigungssensor, Kraftaufnehmer im Bremspedal o. dgl. Die Auslösevorrichtung und Sollwertvorgabe können getrennt ausgebildet sein, z.B. als Taste und Neigungssensor, aber auch gemeinsam durch ein Bedienungselement, z.B. Potentiometer, realisiert sein.

Grundsätzlich können drei Arten der elektrischen Feststellbremsen vorgesehen sein:

Bei der Digitalfeststellbremse wird die Bremse auf eine vorgegebene, vom Fahrer nicht veränderbare, Maximalkraft festgestellt. Gelöst wird die elektrische Feststellbremse um einen ebenfalls vom Fahrer nicht veränderbaren vorgegebenen Weg, der entweder in einer Initialisierungsroutine ermittelt wird oder fest vorgegeben ist, als Konstante in einem nichtflüchtigen Speicher. Aber nur dann, wenn die oben erwähnte nicht veränderbare Maximalkraft eingestellt war. Hierdurch wird der Längenausgleich vorgenommen. Wird die Bremse aber gelöst, bevor diese Kraft erreicht ist, wird der bis dahin, beim jeweiligen Feststellen, gemessene Weg zum Lösen herangezogen. Hier findet kein Längenausgleich statt. Als Bedienung genügt eine Auslösevorrichtung (Taster, Schalter o. ä.), da der Sollwert ja fest vorgegeben ist.

Bei der stufenlosen elektrischen Feststellbremse (servogesteuert) wird ein Feststellen auf eine durch den Sollwertgeber vorgegebene Kraft durchgeführt. Ein Lösen um den fest vorgegebenen Weg (s. digitale elektrische Feststellbremse) wird durchgeführt, wenn der Sollwert der Maximalkraft entspricht. Hierdurch wird der Längenausgleich vorgenommen. In allen anderen Fällen wird der beim jeweiligen Feststellen gemessene Weg zurückgelegt. Zur Bedienung werden eine Auslösevorrichtung und ein Sollwertgeber benötigt.

Eine gestufte elektrische Feststellbremse (servogesteuert) ist ähnlich der stufenlosen Version, allerdings mit groberer Abstufung der möglichen Bremskräfte.

Die Notbetätigung ist die Ersatzfunktion der elektrischen Feststellbremse, nicht der Betriebsbremse. Diese kann rein mechanisch ausgelegt sein (doppeltbelegtes Pedal), aber auch eine zweite elektrische Feststellbremse sein.

Der Kraftaufnehmer im Bremspedal dient der Erfassung der Betätigungskraft des Fahrers auf das Bremspedal und wird als Sollwertvorgabe herangezogen. Dies entspricht nicht der Doppelbelegung eines Pedals, ist auch nicht für das Kupplungspedal vorgesehen.

Ein Längenausgleich erfolgt durch Lösen um einen konstanten Weg, aber nur dann, wenn die elektrische Feststellbremse auf die Maximalkraft festgestellt war. Dieser konstante Weg wird entweder in einer Initialisierungsroutine ermittelt und dann nicht mehr verändert oder ist schon vor der Erstinbetriebnahme des Fahrzeuges in einem nichtflüchtigen Speicher (EPROM, EEPROM) abgelegt

### Bezugszeichenliste

- 10 -: Feststellbremsanlage
- 12 -: Stelleinheit
- 14 -: Betätigungszug
- 16 -: Bremseinrichtung
- 18 -: Steuervorrichtung
- 20 -: Bedienungseinrichtung
- 22 -: Kraftsensor
- 24 -: Wegsensor
- 26 -: Speichervorrichtung
- 28 -: Vergleichsvorrichtung
- 30 -: Signalvorrichtung
- 32 -: Kraftaufnehmer
- 34 -: Neigungssensor
- 36 -: Getriebe
- 38 -: Anzeigevorrichtung
- 40 -: Signalgeber
- 42 -: Bedienelement
- 44 -: Pedal
- 46 -: Hilfsbremsvorrichtung
- 48 -: Zündschalter
- 50 -: Wegfahrsperrvorrichtung
- 52 -: Geschwindigkeitssensor
- 54 -: Bremslichtschalter
- 56 -: Antiblockiersystem
- 58 -: Türschloßkontakt
- 60 -: Diagnosevorrichtung
- 62 -: Begrenzungsvorrichtung

## Patentansprüche

1. Feststellbremsanlage (10) für Fahrzeuge, insbesondere Personenkraftwagen, mit einer fremdkrafterzeugenden Stelleinheit (12) zum Anziehen oder Lösen wenigstens eines Betätigungszuges (14) für eine Bremseinrichtung (16) des Fahrzeuges, mit einer elektronischen Steuervorrichtung (18), deren Ausgangsgröße zur Betätigung der Stelleinheit (12) dient, wobei der Steuervorrichtung (18) Eingangsgrößen, insbesondere von einer Bedienungseinrichtung (20), wie Sensoren und/oder Schaltern, zugeführt werden und die Ausgangsgröße in Abhängigkeit der Eingangsgröße veränderbar ist, und an oder in dem Betätigungszug (14) ein Kraftsensor (22) angeordnet ist zum unmittelbaren Erfassen der auf den Betätigungszug (14) ausgeübten Kraft, wobei die Signale des Kraftsensors (22) der Steuervorrichtung (18) als Eingangsgröße zugeführt werden, **dadurch gekennzeichnet, daß** dem Betätigungszug (14) ein Wegsensor (24) zum Erfassen des Hubes des Betätigungszuges (14) zugeordnet ist, dessen Signale der Steuervorrichtung (18) als Eingangsgröße zugeführt werden.

2. Feststellbremsanlage nach Anspruch 1, **dadurch gekennzeichnet, daß** der Kraftmesser ein elastisches Element aufweist, welches an oder in dem Betätigungszug (14) angeordnet ist und dessen Verformung, bspw. dessen Dehnung oder Torsion, zur Ermittlung der auf den Betätigungszug (14) ausgeübten Kraft dient.

3. Feststellbremsanlage nach Anspruch 1 oder 2, **dadurch gekennzeichnet, daß** die Steuervorrichtung (18) eine Speichervorrichtung (26) und eine Vergleichsvorrichtung (28) aufweist, wobei in der Speichervorrichtung (26) wenigstens Wertepaare oder Datenpaare "Hub des Betätigungszuges(14)/auf den Betätigungszug (14) wirkende Kraft" als Referenzwerte abgelegt sind und in der Vergleichsvorrichtung (28) die Referenzwerte mit den aktuellen Werten verglichen werden.

4. Feststellbremsanlage nach Anspruch 3, **dadurch gekennzeichnet, daß** eine Signalvorrichtung (30) von der Vergleichsvorrichtung (28) betätigbar ist, sofern die Referenzwerte und aktuellen Werte oberhalb einer Toleranzschwelle liegende Abweichungen voneinander aufweisen.

5. Feststellbremsanlage nach Anspruch 3 oder 4, **dadurch gekennzeichnet, daß** die in der Speichervorrichtung (26) abgelegten Referenzwerte aktualisiert bzw. adaptiv nachgeführt werden, so daß kontinuierliche bzw. langfristige Veränderungen der Bremsanlage in den Referenzwerten Berücksichtigung finden.

6. Feststellbremsanlage nach einem der vorhergehenden Ansprüche, **dadurch gekennzeichnet, daß** der Steuervorrichtung (18) als Eingangsgröße Signale für die auf dem Betätigungszug (14) auszuübende Kraft zugeführt werden, wobei als Sollwertgeber bevorzugt ein mit dem Bremspedal des Fahrzeuges gekoppelter Kraftaufnehmer (32) zur Anwendung kommt.

7. Feststellbremsanlage nach einem der vorhergehenden Ansprüche, **dadurch gekennzeichnet, daß** der Steuervorrichtung (18) als Sollwertgeber Signale eines Neigungssensors (34) zugeführt werden.

8. Festellbremsanlage nach einem der Ansprüche 1 bis 5, **dadurch gekennzeichnet, daß** als Sollwertgeber ein Potentiometer oder die Betätigungsdauer eines Tasters oder einer Wippe dient.

9. Feststellbremsanlage nach einem der vorhergehenden Ansprüche, **dadurch gekennzeichnet, daß** die Stelleinheit (12) als Gleichstrommotor mit angeschlossenem oder integrierten Getriebe (36) ausgebildet ist.

10. Feststellbremsanlage nach einem der Ansprüche 1 bis 9, **dadurch gekennzeichnet, daß** der zur Ausübung eines vorbestimmten Kraftwertes erforderliche Hubwert des Betätigungszuges (14) während des Anziehens der Bremse in einer Speichervorrichtung (26) abgelegt ist und der Betätigungszug (14) zum Lösen der Bremse um einen bevorzugt konstanten Hubwert mittels der Stelleinheit (12) verfahren wird.

11. Feststellbremsanlage nach einem der vorhergehenden Ansprüche, **dadurch gekennzeichnet, daß** an einem Ausgang der Steuervorrichtung (18) eine Anzeigevorrichtung (38), wie eine optische Anzeige, bspw. ein LED-Band, oder eine akustische Anzeige angeschlossen ist, mit der die aktuellen Bremskraftwerte darstellbar sind.

12. Feststellbremsanlage nach einem der vorhergehenden Ansprüche, **dadurch gekennzeichnet, daß** die Bedienungseinrichtung (20) als einstufiger, mehrstufiger oder stufenloser Signalgeber (40) ausgebildet ist.

13. Feststellbremsanlage nach einem der vorhergehenden Ansprüche, **dadurch gekennzeichnet, daß** die Bedienungseinrichtung (20) als mechanisches Bedienelement (42) zum Anziehen oder Lösen des Betätigungszuges (14) ausgebildet ist.

14. Feststellbremsanlage nach einem der vorhergehenden Ansprüche, **dadurch gekennzeichnet, daß** bei Ausfall der Betriebsbremsanlage eine Hilfsbremsvorrichtung (46) zum Umschalten der Feststellbremse in einen Hilfsbremsmodus vorgesehen ist, wobei ggf. ein Pedal (44), bevorzugt das Bremspedal einen Kraftaufnehmer (32) als Sollwertgeber für die Feststellbremse bzw. die einzustellende Bremskraft aufweist oder ein zusätzliches Steuergerät und/oder eine zusätzliche Stelleinheit (12) und/oder eine zusätzliche Batterie vorgesehen sind.

15. Feststellbremsanlage nach einem der vorhergehenden Ansprüche, **dadurch gekennzeichnet, daß** der Steuervorrichtung (18) als Eingangsgröße wenigstens eines der folgenden Signale zugeführt wird: Signal des Zündschalters (48), Signal der Wegfahrsperrvorrichtung (50), Signal des Geschwindigkeitsmessers (52), Signal eines Bremslichtschalters (54), Signale des Antiblockiersystems(56), Signale eines Türschloßkontaktes (58), Signale einer Diagnosevorrichtung (60).

16. Feststellbremsanlage nach Anspruch 14 oder 15, **dadurch gekennzeichnet, daß** bei Diagnose eines Fehlers in der Betriebsbremsanlage des Fahrzeuges die Feststellbremsanlage (10) selbsttätig von der Hilfsbremsvorrichtung (46) in den Hilfsbremsmodus überführt wird.

17. Feststellbremsanlage nach einem der vorhergehenden Ansprüche, **dadurch gekennzeichnet, daß** die von der Stelleinheit (12) auf den Betätigungszug (14) ausgeübte Kraft mittels einer Begrenzungsvorrichtung (62) auf einen oberen Grenzwert beschränkt wird.

18. Feststellbremsanlage nach einem der Ansprüche 14 bis 16, **dadurch gekennzeichnet, daß** zur Diagnose eines Fehlers der Motorstrom der Stelleinheit (12), die Dauer eines Bremsvorganges oder das Überschreiten einer vorgegebenen Dauer des Bremsvorganges gemessen werden.

19. Feststellbremsanlage nach einem der vorhergehenden Ansprüche, **dadurch gekennzeichnet, daß** die Betätigung der Stelleinheit (12) servogesteuert erfolgt.

20. Festellbremsanlage nach Anspruch 19, **dadurch gekennzeichnet, daß** die Servosteuerung durch Pulsweitenmodulation, durch Regelung der Amplitude der Motorspannung, durch getaktete Motorspannung mit konstantem Puls-Pausen-Verhältnis oder durch Ein-Aus-Betrieb des Motors der Stelleinrichtung (12) erfolgt.

## Claims

1. Parking brake installation (10) for vehicles, particularly passenger motor vehicles, with a setting unit (12), which generates an external force, for applying or releasing at least one actuating pull (14) for braking equipment (16) of the vehicle, with an electronic control device (18), the output magnitudes of which serve for actuation of the setting unit (12), wherein input magnitudes, particularly from operating equipment (20) such as sensors and/or switches, are fed to the control device (18) and the output magnitudes are variable in dependence on the input magnitudes, and a force sensor (22) for direct detection of the force exerted on the actuating pull (14) is arranged at or in the actuating pull (14), wherein the signals of the force sensor (22) are fed to the control device (18) as input magnitudes, **characterised in that** a travel sensor (24) for detection of the stroke of the actuating pull (14) is associated with the actuating pull (14) and the signals of the travel sensor are fed to the control device (18) as input magnitudes.

2. Parking brake installation according to claim 1, **characterised in that** the force meter comprises a resilient element which is arranged at or in the actuating pull (14) and the deformation of which or the stretching or torsion of which serves for ascertaining the force exerted on the actuating pull (14).

3. Parking brake installation according to claim 1 or 2, **characterised in that** the control device (18) comprises a storage device (26) and a comparison device (28), wherein at least one value pair or data pair "stroke of the actuating pull (14) / force acting on the actuating pull (14) is filed in the storage device (14) as reference values and the reference values are compared in the comparison device (28) with the actual values.

4. Parking brake installation according to claim 3, **characterised in that** a signal device (30) is actuable by the comparison device (28) insofar as the reference values and actual values have deviations from one another which lie above a tolerance threshold.

5. Parking brake installation according to claim 3 or 4, **characterised in that** the reference values filed in the storage device (26) are actualised or adaptively tracked so that continual or long-term changes in the braking installation are taken into consideration in the reference values.

6. Parking brake installation according to one of the preceding claims, **characterised in that** signals for the force to be exerted on the actuating pull (4) are fed to the control device (18) as input magnitudes, wherein preferably a force pick-up (32) coupled with the brake pedal of the vehicle is used as target value transmitter.

7. Parking brake installation according to one of the preceding claims, **characterised in that** signals of an inclination sensor (34) are fed to the control device (18) as target value transmitter.

8. Parking brake installation according to one of claims 1 to 5, **characterised in that** a potentiometer or the actuating period of a button or rocker serves as target value transmitter.

9. Parking brake installation according to one of the preceding claims, **characterised in that** the setting unit (12) is constructed as a direct current motor with a connected or an integrated transmission (36).

10. Parking brake installation according to one of claims 1 to 9, **characterised in that** the stroke value, which is required for exertion of a predetermined force value, of the actuating pull (14) is filed in a storage device (26) during application of the brake and for release of the brake the actuating pull (14) is moved through a preferably constant stroke value by means of the setting unit (12).

11. Parking brake installation according to one of the preceding claims, **characterised in that** an indicating device (38), such as an optical indicator, for example an LED strip, or an acoustic indicator, by which the actual braking force value can be represented is connected with an output of the control device (18).

12. Parking brake installation according to one of the preceding claims, **characterised in that** the operating device is constructed as a single-stage, multi-stage or stepless signal transmitter (40).

13. Parking brake installation according to one of the preceding claims, **characterised in that** the operating device (20) is constructed as a mechanical operating element (42) for applying or releasing the actuating pull (14).

14. Parking brake installation according to one of the preceding claims, **characterised in that** in the case of failure of the operating brake installation an auxiliary braking device (46) for switching over the parking brake to an auxiliary brake mode is provided, wherein optionally a pedal (44), preferably the brake pedal, comprises a force pick-up (32) as target value transmitter for the parking brake or the braking force to be set or an additional control device and/or an additional setting unit (12) and/or an additional battery is or are provided.

15. Parking brake installation according to one of the preceding claims, **characterised in that** at least one of the following signals is fed as input magnitude to the control device (18): signal of the ignition switch (48), signal of the immobiliser (50), signal of the speedometer (52), signal of a brake-light switch (54), signals of the anti-blocking system (56), signals of a door-lock contact (58) and signals of a diagnostic device (60).

16. Parking brake installation according to claim 14 or 15, **characterised in that** in the case of diagnosis of a fault in the operating brake installation of the vehicle the parking brake installation (10) is automatically transferred by the auxiliary braking device (46) into the auxiliary brake mode.

17. Parking brake installation according to one of the preceding claims, **characterised in that** the force exerted on the actuating pull (14) by the setting unit (12) is restricted by means of a limiting device (62) to an upper limit value.

18. Parking brake installation according to one of claims 14 to 16, **characterised in that** the motor current of the setting unit (12), the duration of a braking process or the exceeding of a predetermined duration of the braking process is measured for the diagnosis of a fault.

19. Parking brake installation according to one of the preceding claims, **characterised in that** the actuation of the setting unit (12) is carried out in servo-controlled manner.

20. Parking brake installation according to claim 19, **characterised in that** the servo control is carried out by pulse-width modulation, by regulation of the amplitude of the motor voltage, by keyed motor voltage with a constant pulse-pause ratio or by on-off operation of the motor of the setting device (12).

## Revendications

1. Système de freinage (10) pour l'immobilisation d'un véhicule, notamment véhicule de tourisme, comportant une unité de réglage (12) produisant une force extérieure pour serrer ou desserrer au moins un câble d'actionnement (14) d'un dispositif de freinage (16) du véhicule, un dispositif de pilotage électronique (18) dont la grandeur de sortie sert à l'actionnement de l'unité de réglage (12), dans lequel des grandeurs d'entrée provenant notamment d'un dispositif de commande (20) tel que des détecteurs et/ou des interrupteurs, sont transmises au dispositif de pilotage (18) et la grandeur de sortie peut être modifiée en fonction de la grandeur d'entrée, et un détecteur de force (22) est monté sur ou dans le câble d'actionnement pour la saisie immédiate de la force développée sur le câble d'actionnement (14), et les signaux du détecteur de force (22) sont transmis au dispositif de pilotage (18) comme grandeur d'entrée, **caractérisé en ce qu'**un détecteur de course (24) est monté sur le câble d'actionnement (14) pour saisir l'élévation du câble d'actionnement (14), et **en ce que** les signaux de ce détecteur sont transmis comme grandeur d'entrée au dispositif de pilotage (18).

2. Système de freinage d'immobilisation selon la revendication 1, **caractérisé en ce que** l'organe de mesure de la force comporte un élément élastique qui est disposé sur ou dans le câble d'actionnement (14) et dont le façonnage, notamment son allongement ou sa torsion, sert à la détermination de la force développée sur le câble d'actionnement (14).

3. Système de freinage d'immobilisation selon la revendication 1 ou 2 **caractérisé en ce que** le dispositif de pilotage (18) comporte un dispositif à mémoire (26) et un dispositif comparateur (28), et **en ce que** dans le dispositif à mémoire (26) au moins des paires de valeurs ou des paires de données « Elévation du câble d'actionnement (14)/ force agissant sur le câble d'actionnement (14) » sont introduites comme valeurs de référence, et ces valeurs de référence sont comparées dans le dispositif comparateur (2) avec les valeurs réelles actuelles.

4. Système de freinage d'immobilisation selon la revendication 3 **caractérisé en ce qu'**un dispositif de signalisation (30) peut être actionné par le dispositif comparateur (28) tant que les valeurs de référence et les valeurs actuelles présentent entre elles des écarts situés au-dessus d'un seuil de tolérance.

5. Système de freinage d'immobilisation selon la revendication 3 ou 4 **caractérisé en ce que** dans le dispositif à mémoire (26) des valeurs de référence sont actualisées ou introduites avec ajustement automatique, de sorte que les variations du système de freinage sont prises en considération de manière continue ou à long terme dans les valeurs de référence.

6. Système de freinage d'immobilisation selon l'une quelconque des revendications précédentes **caractérisé en ce que** les signaux de la force exercée sur le câble d'actionnement (14) sont introduits comme grandeur d'entrée dans le dispositif de pilotage (18), et **en ce qu'**on utilise de préférence comme émetteur de valeur de consigne un récepteur de force (32) couplé à la pédale de freinage du véhicule.

7. Système de freinage d'immobilisation selon l'une quelconque des revendications précédentes **caractérisé en ce que** les signaux d'un détecteur d'inclinaison (34) sont transmis au dispositif de pilotage (18) comme émetteur de valeur de consigne.

8. Système de freinage d'immobilisation selon l'une des revendications 1 à 5 **caractérisé en ce qu'**on utilise un potentiomètre ou la durée d'actionnement d'un palpeur ou d'un bouton à bascule comme émetteur de valeur de consigne.

9. Système de freinage d'immobilisation selon l'une quelconque des revendications précédentes **caractérisé en ce que** l'unité de réglage (12) est réalisée sous la forme d'un moteur à courant continu équipé d'un organe de commande (36) intégré ou qui lui est relié.

10. Système de freinage d'immobilisation selon l'une des revendications 1 à 9, **caractérisé en ce que** pour la production d'une valeur de force prédéterminée, la valeur d'élévation nécessaire du câble d'actionnement (14) pendant le serrage du frein est stockée dans un dispositif à mémoire (26), et pour le desserrage du frein le câble d'actionnement (14) est déplacé d'une valeur d'élévation constante préférée au moyen de l'unité de réglage (12).

11. Système de freinage d'immobilisation selon l'une quelconque des revendications précédentes, **caractérisé en ce qu'**un dispositif indicateur (38) est relié à la sortie du dispositif de pilotage (18), tel qu'un indicateur optique ou une bande LED, ou un indicateur acoustique, au moyen duquel les valeurs de la force de freinage actuelles peuvent être représentées.

12. Système de freinage d'immobilisation selon l'une quelconque des revendications précédentes, **caractérisé en ce que** le dispositif de commande (20) est constitué par un élément mécanique (42) pour serrer ou pour desserrer le câble d'actionnement (14).

13. Système de freinage d'immobilisation selon l'une quelconque des revendications précédentes **caractérisé en ce que** le dispositif de commande (20) est constitué par un élément de commande mécanique (42) pour serrer ou pour desserrer le câble d'actionnement (14).

14. Système de freinage d'immobilisation selon l'une quelconque des revendications précédentes, **caractérisé en ce qu'**en cas de défaillance du système de freinage de commande il est prévu un dispositif de freinage auxiliaire (46) pour commuter le frein d'immobilisation en mode de freinage auxiliaire, dans lequel le cas échéant une pédale (44), de préférence la pédale de frein, comporte un récepteur de force (32) comme émetteur de la valeur de consigne pour le frein d'immobilisation et pour la force de freinage de réglage, ou un appareil de pilotage supplémentaire et/ou une unité de réglage supplémentaire (12) et/ou une batterie supplémentaire.

15. Système de freinage d'immobilisation selon l'une quelconque des revendications précédentes, **caractérisé en ce qu'**au moins l'un des signaux suivants est transmis au dispositif de pilotage (18) comme grandeur d'entrée: signal de l'interrupteur d'allumage (48), signal du dispositif de blocage de départ (50), signal de l'indicateur de vitesse (52), signal d'un interrupteur de feu de freinage (54), signaux du système anti-blocage (56), signaux d'un contact de serrure de porte (58), signaux d'un dispositif de diagnostic (60).

16. Système de freinage d'immobilisation selon la revendication 14 ou 15, **caractérisé en ce que** lors du diagnostic d'un défaut dans le système de freinage de commande du véhicule, le système de freinage d'immobilisation (10) est transféré automatiquement au mode de freinage auxiliaire par le dispositif de freinage auxiliaire (46).

17. Système de freinage d'immobilisation selon l'une quelconque des revendications précédentes, **caractérisé en ce que** la force développée sur le câble d'actionnement (14) par l'unité de réglage (12) est limitée par un dispositif de limitation (62) à une valeur limite supérieure.

18. Système de freinage d'immobilisation selon l'une des revendications 14 à 16, **caractérisé en ce que** pour le diagnostic d'un défaut du courant du moteur de l'unité de réglage (12), on mesure la durée d'un processus de freinage ou le franchissement d'une durée prédéterminée du processus de freinage.

19. Système de freinage d'immobilisation selon l'une quelconque des revendications précédentes **caractérisé en ce que** l'actionnement de l'unité de réglage (12) est servocommandé.

20. Système de freinage d'immobilisation selon la revendication 19, **caractérisé en ce** la servocommande est réalisée par modulation d'impulsions en largeur, par régulation de l'amplitude de la tension du moteur, par tension cadencée du moteur avec intervalle d'impulsions constant ou par une commande marche- arrêt du moteur du dispositif de réglage (12).
